# EUROPEAN PATENT SPECIFICATION

(11) **EP 1 418 554 B1**
(45) Date of publication and mention of the grant of the patent: **12.03.2008**
(21) Application number: 03024999.9
(22) Date of filing: 30.10.2003
(51) Int. Cl.: G07F 17/32, G07F 17/34, A63F 13/08, G07F 9/10

(54) **Gaming machine**
Spielautomat
Machine de jeu

(30) Priority: 30.10.2002 JP 2002316727
(43) Date of publication of application: 12.05.2004
(73) Proprietor: Aruze Corp., Tokyo 135-0063 (JP)
(72) Inventor: Nagano, Hiroyuki, c/o Aruze Corp., Tokyo 135-0063 (JP)
(74) Representative: HOFFMANN EITLE

(56) References cited:
- GB-A- 2 112 985
- US-A- 4 072 930
- US-A- 4 225 030

## Description

### BACKGROUND OF THE INVENTION

### Field of the Invention

The present invention relates to a gaming machine.

### Related Background Art

Various gaming machines are placed in game arcades known as arcades and casinos, with which many players enjoy playing games. Examples of the gaming machines include slot machines and poker gaming machines (see, for example, Japanese Patent Application Laid-Open No. 2000-342744).

These gamingmachines are those inwhich players insert game media such as coins for playing games, and from which a number of game media multiplied with a predetermined factor are paid out according to results of the games.

Therefore, the number of games actually played cannot be seen from the difference between the respective numbers of game media kept within a gaming machine before and after play, whereby game arcade managers cannot grasp the number of games played in the gaming machine, the number of game media let in/out of the gaming machine, and the like.

Hence, in such a gaming machine, a cabinet for constituting the gaming machine is provided with counters for displaying various numerical values such as those mentioned above. As a consequence, by reading out the numbers displayed in the counters provided in each gaming machine, game arcade managers can obtain data such as the respective numbers.

### SUMMARY OF THE INVENTION

Though a plurality of such numbers must be provided at a position easily viewable by the game arcade managers, the numbers to be placed, the number of display digits required for each counter and the like vary depending on the kind of gaming machines, thus making it necessary to change the designing of a portion to which a counter is positioned even among gaming machines having a cabinet in common.

Since the counters are individually secured to cabinets by using screws and the like, as this is disclosed in GB-A-2112985, the counters must be replaced when making a new gaming machine by reusing the cabinet of a gaming machine, which has taken too much time and trouble.

Further, the structure in the vicinity of the counter varies among the gaming machines, thus making it necessary to prepare new parts, which increases the cost.

In view of the foregoing problem, it is an obj ect of the present invention to provide a gaming machine to which a plurality of counters having display sections for displaying numerical values changing according to states of games can be attached in a simple structure.

For achieving the above-mentioned object, the gaming machine of the present invention comprises a cabinet; a front opening formed in the cabinet; a transparent plate disposed so as to close the front opening; and a plurality of counter displays including respective display sections for displaying numerical values changing according to a state of a game; wherein a container for accommodating the plurality of counter displays is disposed within the cabinet such that an open end of the container opposes the transparent plate; and wherein the plurality of counter displays are supported by being pressed by a rear lid from behind the transparent plate while being accommodated in the container with the display sections opposing the transparent plate.

In this configuration, the plurality of counter displays are accommodated in the container such that the displaysectionsopposethetransparentplateandarepressed and supported by the rear lid. Thus, they are not individually fastened with screws as in conventional counters, but are collectively secured by the rear lid, which can reduce the number of parts and the time and trouble required for assembling.

Also, all the counters can be taken out by removing the rear lid alone, which facilitates the maintenance.

Accommodating the counters in the container makes it possible to position the counters and the like with respect to the cabinet, which can prevent the counters and the like from shifting their securing positions.

Therefore, a gaming machine which can attach a plurality of counter displays thereto in a simple structure is provided.

Preferably, in the gaming machine of the present invention, the rear lid comprises an absorber on a surface opposing the plurality of counter displays.

In this configuration, the counter displays can be secured by a surface pressure with the absorber of the rear lid. Therefore, the counter displays can be secured independently of their shapes. This yields versatility, thereby making it possible to raise the degree of freedom in design.

Preferably, in the gaming machine of the present invention, the plurality of counter displays are accommodated in the container while in a state arranged in a row.

In this configuration, the counter displays can be accommodated in a state arranged in a row, whereby the container can be made thinner, which can save spaces.

Preferably, the gaming machine of the present invention further comprises a projection protruding to the front side of the cabinet, the front opening being disposed below the projection, the display sections displaying a numerical value to be provided to a manager for managing the gaming machine. In this configuration, since the front opening is disposed below the forwardly protruding projection, the display sections of the counter displays are located at a dead angle from players. Therefore, the display sections can be disposed at a position hard to be seen by the players, so as to provide the manager with a numerical value for managing the gaming machine.

Preferably, in the gaming machine of the present invention, the container is detachably attached within the cabinet. Since the container is detachably attached within the cabinet, the container is easy to detach from the cabinet and attach another cabinet.

### BRIEF DESCRIPTION OF THE DRAWINGS

Fig. 1 is a front view of the gaming machine in accordance with an embodiment of the present invention;
Fig. 2 is an exploded perspective view of the pedestal and counters in the embodiment;
Fig. 3 is a sectional view showing the pedestal and display window in the embodiment;
Fig. 4 is a perspective view showing another embodiment of container for accommodating the counters;
Fig. 5 is a perspective view of a first member constituting the container;
Fig. 6 is a perspective view of a second member constituting the container;
Fig. 7 is an exploded perspective view showing the pedestal and counters together with the another embodiment of container; and
Fig. 8 is a perspective view of the gaming machine in accordance with another embodiment of the present invention.

### DESCRIPTION OF THE PREFERRED EMBODIMENTS

In the following, preferred embodiments of the present invention will be explained with reference to the drawings. Parts identical or equivalent to each other will be referred to with numerals identical to each other. Here, embodiments in which the gaming machine in accordance with the present invention is employed for a video slot machine using an image display unit for displaying various kinds of information necessary for a game as images will be explained. A gaming machine 1 concerning embodiments is one which play a game by using bills, and coins, medals, tokens, or the like which are game media. The gaming machine 1 may be utilized as oneusingbills andcoins in the following. The gaming machine of the present invention can also be a mechanical slot machine instead of the video slot machine.

### Configuration of Gaming Machine

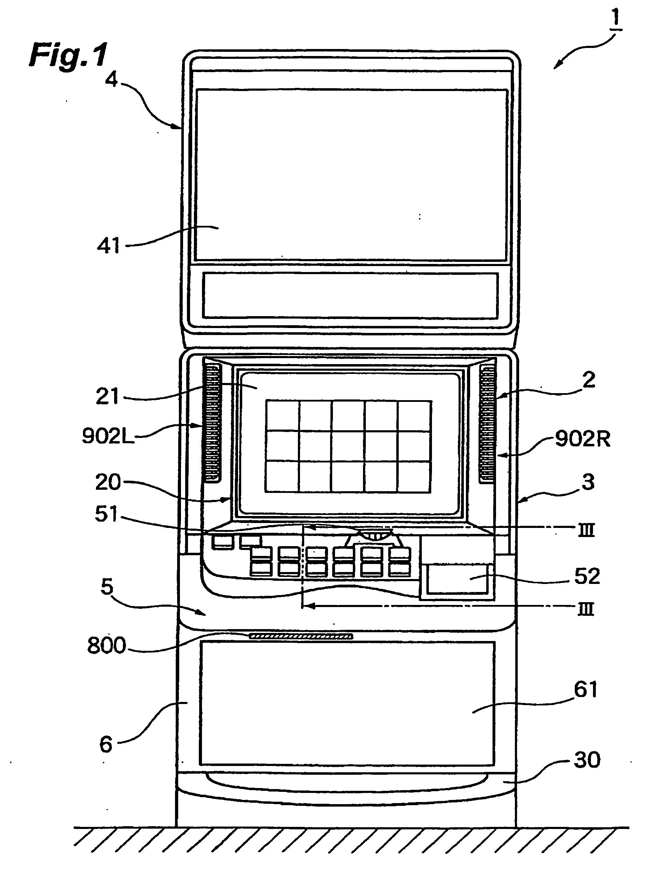

Fig. 1 shows a front view of the gaming machine 1. In this specification, the words indicating directions will be used with reference to the state shown in Fig. 1. Namely, the state in which the gaming machine 1 stands erect is taken as a reference, and the direction from a cabinet 2 to a top frame 4 is defined as upward. The direction from the gaming machine 1 to a position where a player plays a game is defined as forward or front side.

In the gaming machine 1, a door member 3 also functioning as a front door is attached to the cabinet 2 so as to be able to open and close . The top frame 4 is attached to the upper side of the cabinet 2. A decorative panel 41 is provided in front of the top frame 4.

An image display unit 21 for displaying game information is placed within the cabinet 2. In order for the display of the image display unit 21 to be viewable, an opening 20 is formed in the upper part of the door member 3, whereas a transparent plate for making the display of the image display unit 21 viewable or protecting the image display unit 21 is attached to the opening 20. Formed on both wings of the opening 20 are speaker grills 902L and 902R for making it easy to hear sound effects or incidental music generated according to states of games.

Disposed below the opening 20 is a control panel 5 projecting forward. Various operating buttons are arranged in the control panel 5, whereas a coin slot 51 for inserting coins is provided on a slightly right side behind the buttons. Further, a bill guide 52 for guiding bills into a bill identifier (bill validator) accommodated in the cabinet 2 is provided on the right side of the control panel 5.

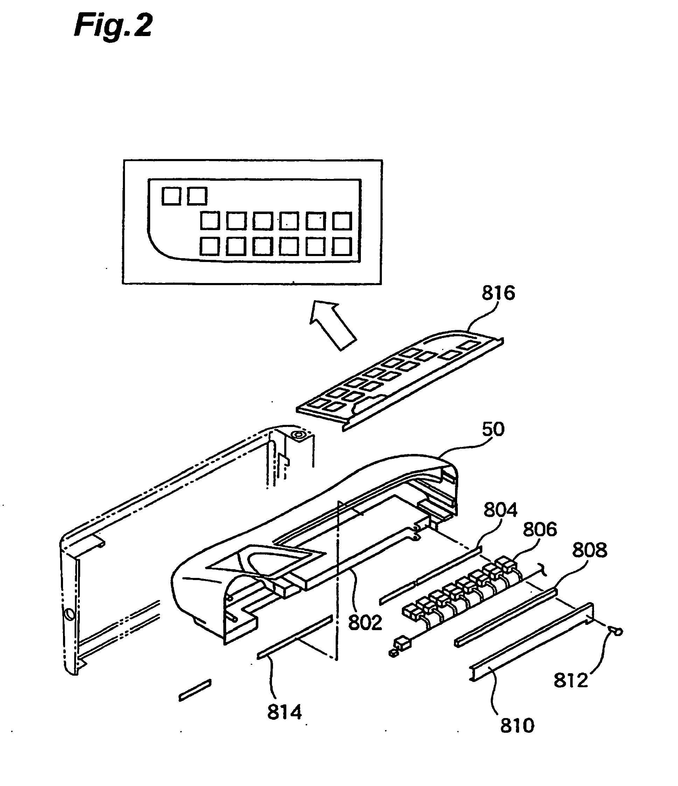

Provided below the pedestal forming the control panel 5 is a display window 800 for displaying a plurality of counters 806 (see Fig. 2) including display sections for displaying numerical values changing according to states of games. The counters 806 display numerical values utilized by game arcade managers for managing the gaming machine 1. This allows the game arcade managers to read out the numerical values indicated by the counters 806 placed within the cabinet 2 directly without opening the door member of the gaming machine 1 and the like.

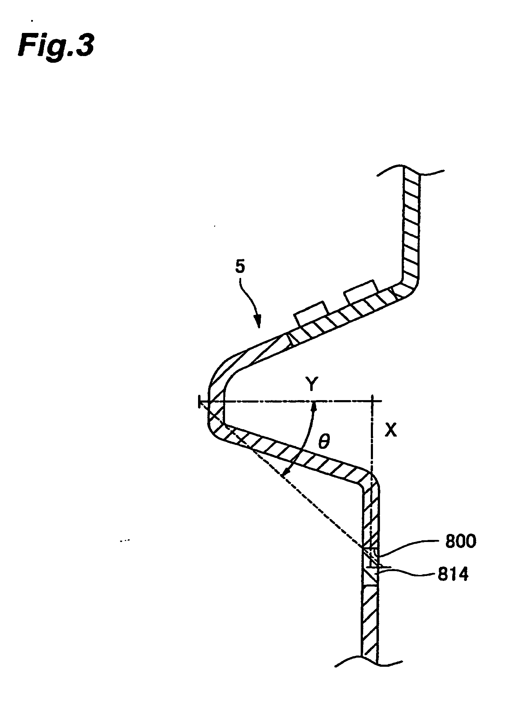

Fig. 3 is a sectional view showing the pedestal and display window 800. The pedestal (projection) forming the control panel 5 protrudes toward the front side of the gaming machine, i.e., toward the position where a player plays games. The display window 800 is located below the pedestal. Preferably, the projection length Y of the pedestal and the distance X from the base end of the pedestal to the display window 800 have such a relationship that tanθ = X/Y is 45° or less. This configuration positions the opening 20 at a dead angle with players, which makes it difficult for the players to see the numerical values displayed in the counters 806.

Placing the counters 806 at this position allows game arcade managers and the like to read out the numerical values of the counters without opening the door of the gaming machine, while making it difficult for players to see the numerical values.

Though the counters 806 are placed at a position viewable from the display window 800 provided below the pedestal in this embodiment, the present invention is not limited to this embodiment. It will be sufficient if the counters are placed in a part not so visible to the players. For example, the counters may be provided at a position which cannot be seen until the door of the gaming machine or the like is opened.

Provided below the control panel 5 is a lower frame 6 connected to the door member 3 in a freely opening and closing fashion. The lower frame 6 incorporates a decorative panel 61 therein. The decorative panel 61 is provided with a decoration indicating the kind of the gaming machine and the like. The decorative panel 41 of the top frame 4 located above the screen of the image display unit 21 is also provided with the decoration in an easily viewable fashion.

Though this embodiment is configured such that the decorative panels 41 and 61 are provided with decorations indicating the kind of the gaming machine and the like, the present invention is not limited to this embodiment. For example, the decorative panel 41 may provide players with information, such as explanations concerning how to play games in the gaming machine, or decorations with simple patterns.

Formed below the lower frame 6 is a coin tray 30 for receiving coins, where coins discharged from within the cabinet are stored when the coins are paid out as a result of a game and the like.

### Configuration of Counter Fixing Portion

Fig. 2 is an exploded perspective view of the pedestal constituting the control panel 5 and the counters placed within the pedestal.

Placed on a pedestal frame 50 forming the pedestal is an operation panel 816 comprising a plurality of operation buttons. The operation panel 816, the coin slot 51, and a bill insertion slot form the control panel 5. As players carry out various operations with the control panel 5, games proceed.

Provided within the pedestal frame 50 is a tubular container 802 having an opening with a horizontally elongated thin cross section for accommodating the counters 806, thereby fixing a position for placing the counters 806, which will be explained later.

The tubular container 802 accommodates a counter display indicator panel 804, the counters 806, and a sponge-like absorber 808 successively from the front side of the gaming machine.

Here, the counter display indicator panel 804 indicates what are meant by the respective numerical values displayed by the counters 806.

The counters 806 display numerical values changing according to states of games in the gaming machine 1, specifically, integrated numerical values of the number of games played, numbers of coins and bills inserted into the gaming machine, number of coins paid out, number of jackpots occurred, and the like. In Fig. 2, a plurality of counters are depicted in a state arranged in parallel.

The sponge-like absorber 808 functions as a spacer within the tubular container 802.

Further, a surface-pressure plate (rear lid) 810 is pressed against the tubular container 802 frombehind, and is secured to the tubular container 802 with a screw 812.

The front opening of the tubular container 802 is in contact with the display window 800, whereas a transparent plate 814 fits in the display window 800.

In the foregoing configuration, the counter display indicator panel 804 and the counters 806 are fixed by being pressed against the transparent plate 814 on the front side by the surface-pressure plate 810 from behind by way of the sponge-like absorber 808. In a conventional gaming machine, a plurality of counters are individually secured to the cabinet with screws and the like, thus increasing the number of parts and the time and trouble for assembling. The above-mentioned configuration of the present invention can reduce the number of parts and the labor of assembling. Further, since the individual counters are secured by a surface pressure with the sponge-like absorber 808 from behind, the same surface-pressure plate 801 can secure various kinds of counters with different sizes and harness positions without redesigning theform of thesurface-pressure plate 810, which can increase the versatility of members.

Also, the counter display indicator panel 804 is secured by being held between the transparent plate 814 and the counters 806 alone, whereby no special parts are necessary for fixing.

Further, the plurality of counters 806 are arranged in a row as shown in Fig. 2. Such an arrangement can make the tubular container thinner, thereby saving spaces. Thus, as shown in Fig. 1, the counters can be placed in parts which are not so visible to players, such as the part below the pedestal as shown in Fig. 1.

### Counter Functions

The counters 806 are electrically connected to a control unit provided within the cabinet and, in response to an order from the control unit, adds 1 to the numerical value displayed on each counter.

Specifically, for example, for causing the counters 806 to display the total number of coins inserted, a coin sensor electrically connected to the control unit transmits a signal indicative of a coin insertion to the control unit when sensing an insertion of a coin into the coin slot 51. Then, to the counter 806 for displaying the total number of coins inserted, the control unit having received the signal transmits a signal for adding 1 to the displayed numerical value. As a consequence, the counter 806 can accurately display the total number of coins inserted.

Also, a hopper for accumulating and paying out coins is electrically connected to the control unit. In response to a signal indicating that the hopper is driven, the control unit transmits a signal for adding 1 to the displayed numerical value to the counter 806 for displaying the total number of coins paid out, whereby the counter 806 can accurately display the total amount of coins paid out.

The control unit also controls the details of games in the gaming machine 1, and thus transmits a signal for adding 1 to the displayed numerical value to the counter 806 for displaying the number of games played, whereby the counter 806 can accurately display the total number of games played.

Though three items, i.e. the total number of coins inserted, the total number of coins paid out, and the total number of games played, are displayed in the counters 806 in this embodiment, any items can be displayed in the present invention without being restricted to those mentioned above as long as they are numerical values changing according to states of games.

In the foregoing configuration, counters for displaying numerical values that change according to states of games are collectively fixed with a rear lid without individually fastening themwith screws or limiting the forms and number of the counters as in conventional counters, whereby the number of parts and the trouble of assembling can be reduced. Also, all the counters can be taken out by simply removing the rear lid, which facilitates the maintenance. Further, accommodating the counters in the tubular container can position the counters and the like with respect to the cabinet, thereby preventing the counters and the like from shifting their securing positions.

The effects described in the specification simply list thepreferable effectsresultingfrom the present invention. The effects of the present invention should not be limited to those described in the specification.

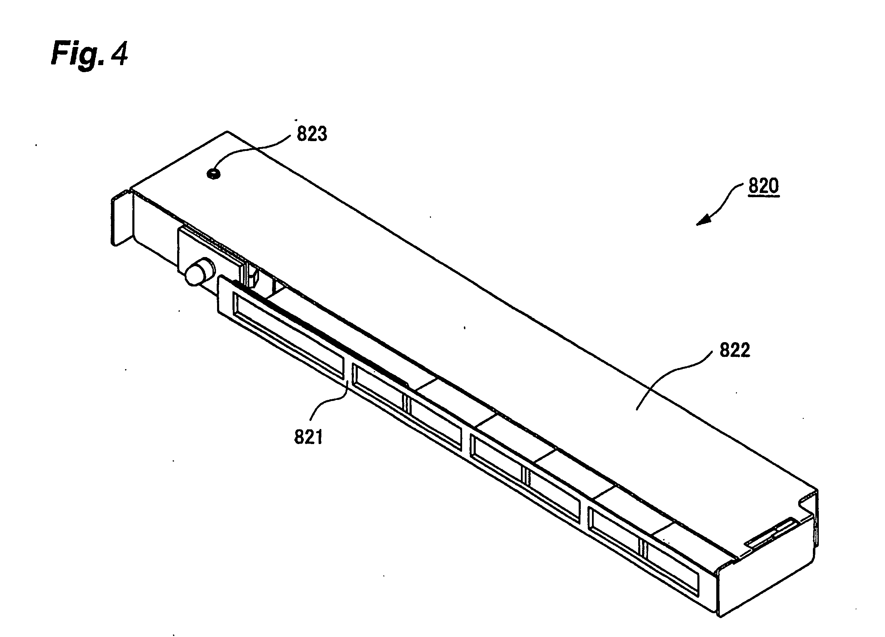

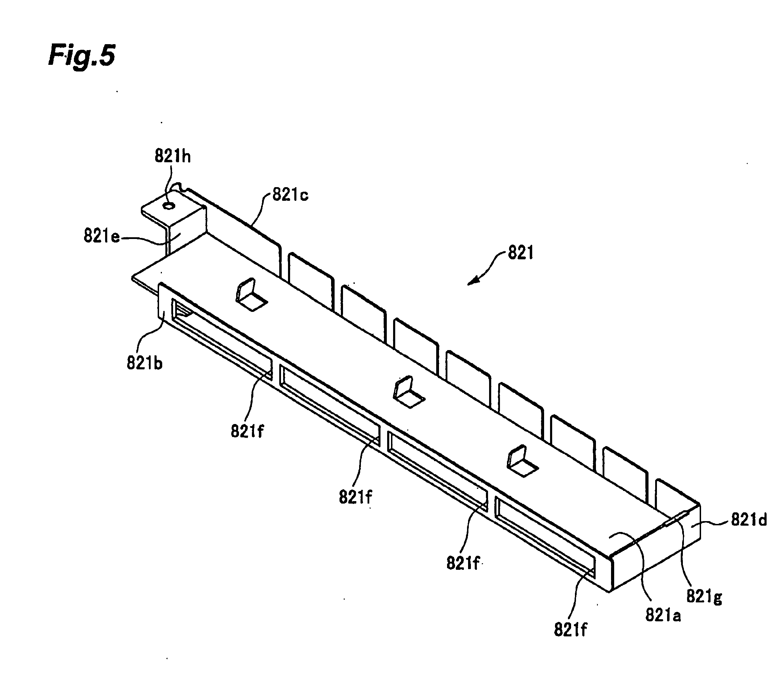

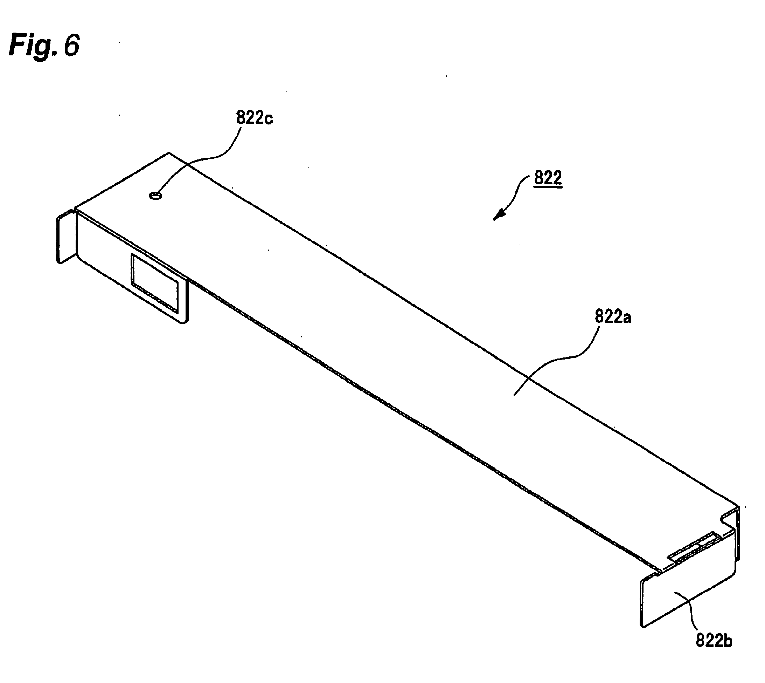

Fig. 4 is a perspective view of the container 820 in accordance with another embodiment of the tubular container 802. The container 820 is constituted by a first member 821 and a second member 822. Fig. 5 is a perspective view of the first member 821, whereas Fig. 6 is a perspective view of the second member 822.

The first member 821 comprises a bottom plate 821a, a front plate 821b, a rear plate 821c, and side walls 821d and 821e. The bottomplate 821a is provided for mounting the counters 806.

The front plate 821b is disposed so as to extend along a plane intersecting the bottom plate 821a and oppose the display window 800. The front plate 821b is provided with a plurality of openings 821f so that the counter display indicator panel 804 can be seen from the display window 800.

The rear plate 821c is disposed so as to oppose the front plate 821b. The rear plate 821c supports the counters 806 by pressing them from behind. The rear plate 821c is formed with a plurality of cutouts. Signal lines extending from the backside of the counters 806 pass through the plurality of cutouts.

The side wall 821d is disposed along a plane intersecting the bottom plate 821a and front plate 821b. Disposed at the upper end of the side wall 821d is a pawl 821g bent from the side wall 821d.

The side wall 821e is disposed along a plane intersecting the bottom plate 821a and front plate 821b. The upper end of the side wall 821d is bent so as to oppose an upper plate 822a of the second member 822 and is formed with a screw hole 821h.

The second member 822 is a member for covering the counters 806, mounted to the first member 821, from thereabove. The second member 822 comprises a front plate 822a and a side wall 822b.

The front plate 822a is disposed so as to oppose the bottom plate 821a of the first member 821. The front plate 822a is provided with a hole 822c at a position corresponding to the screw hole 821h. The junction between the front plate 822a and the side wall 822b is formed with an opening. The pawl 821g of the first member 821 passes through this opening. The pawl 821g engages the upper end of the side wall 822b exposed at the opening. The screw 823 passing through the hole 822c is fixed to the screw hole 821h, whereby the first member 821 and second member 822 are secured to each other.

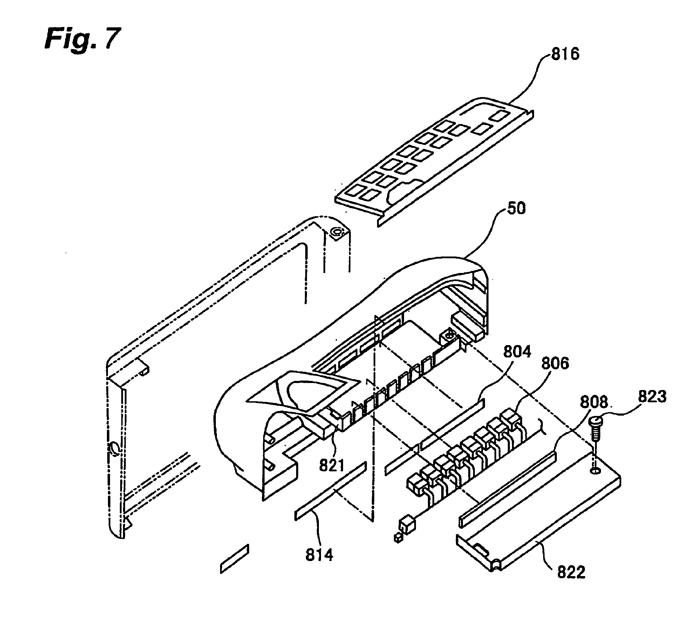

Fig. 7 is an exploded perspective view showing the pedestal and counters 806 together with the container 820. The container 820 is disposed within the pedestal frame 50. The container 820 is detachably attached to the pedestal frame 50. For example, the container 820 is attached to the pedestal frame 50 by a screw or the like. Since the container 820 is detachably attached to the pedestal frame 50, the container is easy to detach to the pedestal frame 50 and attach a cabinet of other gaming machine. Thus the spirit of the present invention is realized when using the container 820 constituted by two members of the first member 821 and second member 822 instead of the integrally molded tubular container 802.

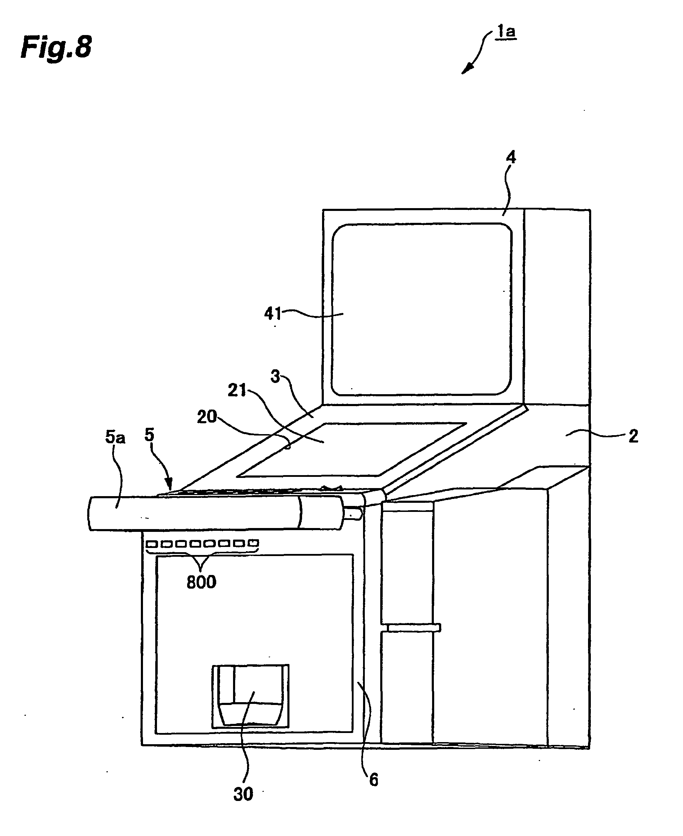

Fig. 8 is a perspective view of the gaming machine 1a in accordance with another embodiment of the present invention. This gaming machine 1a is a so-called slant type gamingmachine, in which the image display unit 21 is disposed in a tilted fashion.

In the gaming machine 1a, the control panel 5 is provided so as to continue downward from the image display unit 21. In front of the control panel 5, a pedestal (projection) 5a is provided so as to project forward. The display window 800 is provided below the pedestal 5a. As such, the display window 800 can be disposed below the forwardly projecting pedestal 5a, i.e., at a position which is hard to be seen by players in the slant type gaming machine 1a as well.

## Claims

1. A gaming machine (1) comprising:
a cabinet (2);
a front opening (20) formed in the cabinet (2);
a transparent plate disposed so as to close the front opening; and
a plurality of counter displays (806) including respective display sections for displaying numerical values changing according to a state of a game;
wherein a container (802) for accommodating the plurality of counter displays (806) is disposed within the cabinet (2) such that an open end of the container (802) opposes the transparent plate; and
**characterised in that** the plurality of counter displays (806) are supported by being pressed by a rear lid (810) from behind the transparent plate while being accommodated in the container (802) with the display sections opposing the transparent plate.

2. A gaming machine according to claim 1, wherein the rear lid comprises an absorber on a surface opposing the plurality of counter displays.

3. A gaming machine according to claim 1 or claim 2, wherein the plurality of counter displays are accommodated in the container while arranged in a row.

4. A gaming machine according to one of claims 1 to 3, further comprising aprojection protruding to the front side of the cabinet;
wherein the front opening is disposed below the projection; and
wherein the display sections display a numerical value to be provided to a manager for managing the gaming machine.

5. A gaming machine according to one of claims 1 to 4, wherein the container is detachably attached within the cabinet.

## Patentansprüche

1. Spielautomat (1), umfassend:
ein Gehäuse (2);
eine vordere Öffnung (20), die im Gehäuse (2) ausgebildet ist;
eine transparente Scheibe, die so angeordnet ist, dass sie die vordere Öffnung verschließt, und
eine Vielzahl von Zählanzeigen (806), die jeweilige Anzeigeabschnitte zum Anzeigen von numerischen Werten enthalten, welche sich entsprechend einem Zustand eines Spiels ändern;
wobei ein Behälter (802) zur Unterbringung der Vielzahl von Zählanzeigen (806) im Gehäuse (2) so angeordnet ist, dass ein offenes Ende des Behälters (802) der transparenten Scheibe gegenüberliegt; und
**dadurch gekennzeichnet, dass** die Vielzahl der Zählanzeigen (806) **dadurch** getragen werden, dass sie von einem hinteren Deckel (810) von der Hinterseite der transparenten Scheibe aus gedrückt werden, während sie in dem Behälter (802) mit den der transparenten Scheibe gegenüberliegenden Anzeigeabschnitten untergebracht sind.

2. Spielautomat nach Anspruch 1, wobei der hintere Deckel ein Dämpfungselement auf einer der Vielzahl der Zählanzeigen gegenüberliegenden Oberfläche umfasst.

3. Spielautomat nach Anspruch 1 oder Anspruch 2, wobei die Vielzahl von Zählanzeigen in dem Behälter in einer Reihe angeordnet untergebracht sind.

4. Spielautomat nach einem der Ansprüche 1 bis 3, weiter einen Vorsprung umfassend, der zur Vorderseite des Gehäuses vorsteht;
wobei die vordere Öffnung unterhalb des Vorsprungs angeordnet ist; und
wobei die Anzeigeabschnitte einen numerischen Wert anzeigen, der einem Verwalter zum Verwalten des Spielautomats bereitzustellen ist.

5. Spielautomat nach einem der Ansprüche 1 bis 4, wobei der Behälter abnehmbar im Gehäuse befestigt ist.

## Revendications

1. Machine de jeu (1) comprenant:
un compartiment (2);
une ouverture avant (20) formée dans le compartiment (2);
une plaque transparente disposée de manière à fermer l'ouverture avant; et
une pluralité d'afficheurs à compteurs (806) incluant des sections d'affichage respectives pour afficher des valeurs numériques changeant selon l'état d'un jeu;
où un conteneur (802) pour loger la pluralité d'afficheurs à compteurs (806) est disposé dans le compartiment (2) de telle sorte qu'une extrémité ouverte du conteneur (802) soit opposée à la plaque transparente; et
**caractérisée en ce que** la pluralité d'afficheurs à compteurs (806) sont soutenus en étant pressés par un couvercle arrière (810) depuis la partie arrière de la plaque transparente tout en étant logés dans le conteneur (802) avec les sections d'affichage opposées à la plaque transparente.

2. Machine de jeu selon la revendication 1, dans laquelle le couvercle arrière comprend un absorbeur sur une surface opposée à la pluralité d'afficheurs à compteurs.

3. Machine de jeu selon la revendication 1 ou la revendication 2, dans laquelle la pluralité d'afficheurs à compteurs sont logés dans le conteneur tout en étant est agencés en ligne.

4. Machine de jeu selon l'une des revendications 1 à 3, comprenant en plus une projection en protubérance vers le côté avant du compartiment;
où l'ouverture avant est disposée sous la projection; et
où les sections d'affichage affichent une valeur numérique à fournir à un gérant pour gérer la machine de jeu.

5. Machine de jeu selon l'une des revendications 1 à 4, dans laquelle le conteneur est fixé de manière détachable dans le compartiment.
